# EUROPEAN PATENT APPLICATION

(11) **EP 4 299 432 A1**
(43) Date of publication of application: **03.01.2024**
(21) Application number: 22182650.6
(22) Date of filing: 01.07.2022
(51) Int. Cl.: B63B 35/44, B63J 3/04

(54) **AN ARRANGEMENT FOR GENERATING ELECTRICAL ENERGY IN A BUOYANT VESSEL AND A BUOYANT VESSEL**

(71) Applicant: Sunborn Energy Limited, London SW1H 9HP (GB)
(72) Inventor: Heikkinen, Lasse, 10420 Pohjankuru (FI); Niemi, Hans, 20101 Turku (FI)
(74) Representative: Kolster Oy Ab

(57) **Abstract**

The present invention relates to the field of buoyant vessels, such as e.g. hotel ships arranged to serve as a full-service hotel and restaurant facilities, and more particularly to an arrangement for generating electrical energy in a buoyant vessel and to a buoyant vessel. An arrangement for generating electrical energy in a buoyant vessel according to the present invention comprises a buoyant vessel (1, 1A, 1B) and an at least one pile (10, 10A, 10B) fixedly moored in the seabed (3) or in the riverbed (3), each of said at least one pile (10, 10A, 10B) comprising in its upper portion an at least one linear gear rack (11), wherein said buoyant vessel (1, 1A, 1B) comprises: an at least one circular pinion gear (12) arranged to engage with said at least one linear gear rack (11), an at least one gear arrangement (20) arranged to receive rotational motion from said at least one circular pinion gear (12), and a generator (30) arranged to receive rotational motion from said at least one gear arrangement (20) and transfer said received rotational motion into electrical energy.

## Description

### FIELD OF THE INVENTION

The present invention relates to the field of buoyant vessels, such as e.g. hotel ships arranged to serve as a full-service hotel and restaurant facilities, and more particularly to an arrangement for generating electrical energy in a buoyant vessel and to a buoyant vessel.

### BACKGROUND OF THE INVENTION

Buoyant vessels include large watercrafts, such as e.g. hotel ships that are used to carry cargo and/or passengers across the oceans and other sufficiently deep waterways. Hotel ships come in different sizes with some having a displacement weight of 10 000 tons or more.

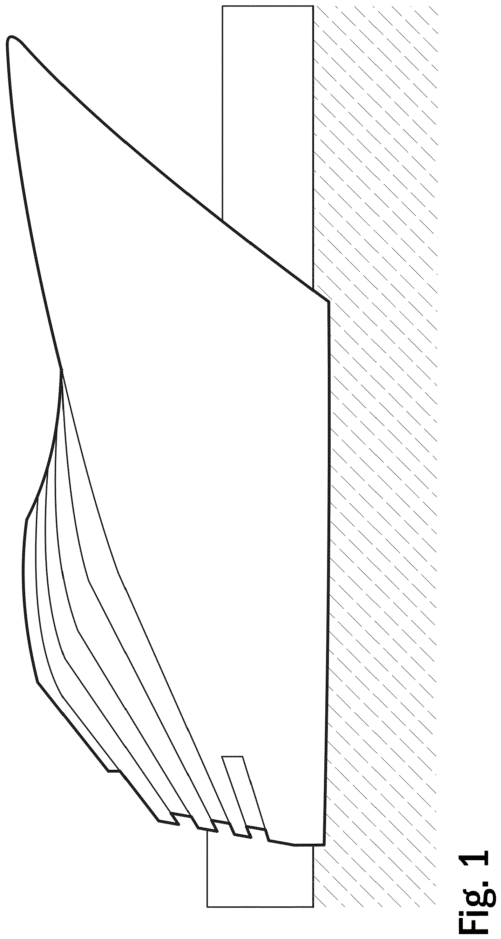

In the following, prior art will be described with reference to the accompanying Figure 1, which illustrates one example of a buoyant vessel according to prior art.

Figure 1 illustrates one example of a buoyant vessel according to prior art. The presented buoyant vessel according to prior art is a e.g. hotel ship docked ashore a city harbor, which is arranged to serve as a full-service hotel and restaurant facility. The presented buoyant vessel according to prior art comprises multiple accommodations such as cabin units or suites for overnight guests. In addition, the presented buoyant vessel according to prior art comprise multitude of other services for the guests such as bars, restaurants, spas, leisure facilities, casinos, etc.

The typical prior art buoyant vessel solutions are equipped with good quality lighting, heating, ventilation, and air conditioning solutions. Consequently, the typical prior art buoyant vessel solutions consume a lot of electrical energy. The energy consumption of the present buoyant vessel solutions is a significant drawback increasing the operative costs and negatively contributing to the environment.

There is a demand in the market for an arrangement for generating electrical energy in a buoyant vessel that would provide for electrical energy that can be used in said buoyant vessel, that can be forwarded to an electrical network or that can be stored for later usage. There is also a demand in the market for a buoyant vessel having said arrangement for generating electrical energy.

### BRIEF DESCRIPTION OF THE INVENTION

The object of the invention is to introduce an arrangement for generating electrical energy in a buoyant vessel and a buoyant vessel, which would provide for electrical energy that can be used in said buoyant vessel, that can be forwarded to an electrical network or that can be stored for later usage. Advantageous embodiments are furthermore presented.

It is brought forward a new arrangement for generating electrical energy in a buoyant vessel, said arrangement comprising a buoyant vessel and an at least one pile fixedly moored in the seabed or in the riverbed, each of said at least one pile comprising in its upper portion an at least one linear gear rack, wherein said buoyant vessel comprises: an at least one circular pinion gear arranged to engage with said at least one linear gear rack, an at least one gear arrangement arranged to receive rotational motion from said at least one circular pinion gear, and a generator arranged to receive rotational motion from said at least one gear arrangement and transfer said received rotational motion into electrical energy.

In a preferred embodiment, said generator is arranged to transfer said electrical energy to an electrical network.

In a preferred embodiment, said generator is arranged to transfer said electrical energy to an energy storage, such as a super capacitor or a battery, said energy storage being arranged to act both as an energy storage and as an energy supply.

In a preferred embodiment, said generator is arranged to transfer said electrical energy to one or more motors.

In a preferred embodiment, said electrical network, said energy storage and/or said one or more motors provide(s) electrical energy for lighting solutions, heating solutions, ventilation solutions, and/or air conditioning solutions in said buoyant vessel.

In a preferred embodiment, said buoyant vessel comprises an at least one shaft frame arranged in said buoyant vessel around said at least one pile, wherein said at least one shaft frame comprise(s) an at least one opening allowing said at least one circular pinion gear to engage with said at least one linear gear rack.

In a preferred embodiment, said at least one shaft frame is arranged in said buoyant vessel so that when in operation said at least one opening in said at least one shaft frame is always above the water level.

In a preferred embodiment, said at least one pile is supported to the shore with an additional support structure.

In a preferred embodiment, said a at least one pile is supported to a tidal dam structure.

In a preferred embodiment, during the buoyant vessel going downwards, when engaged, said generator is arranged to generate a torque resisting the torque of said received rotational motion from said at least one gear arrangement.

In a preferred embodiment, during the buoyant vessel going upwards, when engaged, said generator is arranged to generate a torque resisting the torque of said received rotational motion from said at least one gear arrangement.

In a preferred embodiment, different torque levels are applied for the generated torques between during said buoyant vessel going downwards when compared to during said buoyant vessel going downwards.

In a preferred embodiment, the length of said at least one linear gear rack of said at least one pile is at least Δ*h* + Δ*h_{A}* + *Δh_{B}*, where Δ*h* is the distance between a low tide and a high tide, Δ*h_{A}* is the distance of a generated complementing upwards force lifting the buoyant vessel upwards in relation to the water level as the buoyant vessel is going downwards, and Δ*h_{B}* is the distance of a generated complementing downwards force pressing the buoyant vessel downwards in relation to the water level as the buoyant vessel is going downwards.

Furthermore, it is brought forward a new buoyant vessel of an arrangement for generating electrical energy in a buoyant vessel, said arrangement comprising a buoyant vessel and an at least one pile fixedly moored in the seabed or in the riverbed, each of said at least one pile comprising in its upper portion an at least one linear gear rack, wherein said buoyant vessel comprises: an at least one circular pinion gear arranged to engage with said at least one linear gear rack, an at least one gear arrangement arranged to receive rotational motion from said at least one circular pinion gear, and a generator arranged to receive rotational motion from said at least one gear arrangement and transfer said received rotational motion into electrical energy.

In a preferred embodiment, said buoyant vessel is a ship arranged to serve as a hotel and/or restaurant facility.

### BRIEF DESCRIPTION OF THE DRAWINGS

In the following, the present invention will be described in more detail by way of example and with reference to the attached drawings, in which:
Figure 1 illustrates one example of a buoyant vessel according to prior art.
Figure 2 illustrates a part of one embodiment of a pile of an arrangement for generating electrical energy in a buoyant vessel according to the present invention.
Figure 3 illustrates an operational diagram of one embodiment of an arrangement for generating electrical energy according to the present invention.
Figure 4 illustrates one embodiment of an arrangement for generating electrical energy in a buoyant vessel according to the present invention during a high tide.
Figure 5 illustrates one embodiment of an arrangement for generating electrical energy in a buoyant vessel according to the present invention during a low tide.
Figure 6 illustrates a variation of water level between a low tide and a high tide during a 24-hour period.
Figure 7 illustrates operational cycles of one embodiment of an arrangement for generating electrical energy according to the present invention.
Figure 8 illustrates another embodiment of an arrangement for generating electrical energy in a buoyant vessel according to the present invention.

The foregoing aspects, features and advantages of the invention will be apparent from the drawings and the detailed description related thereto.

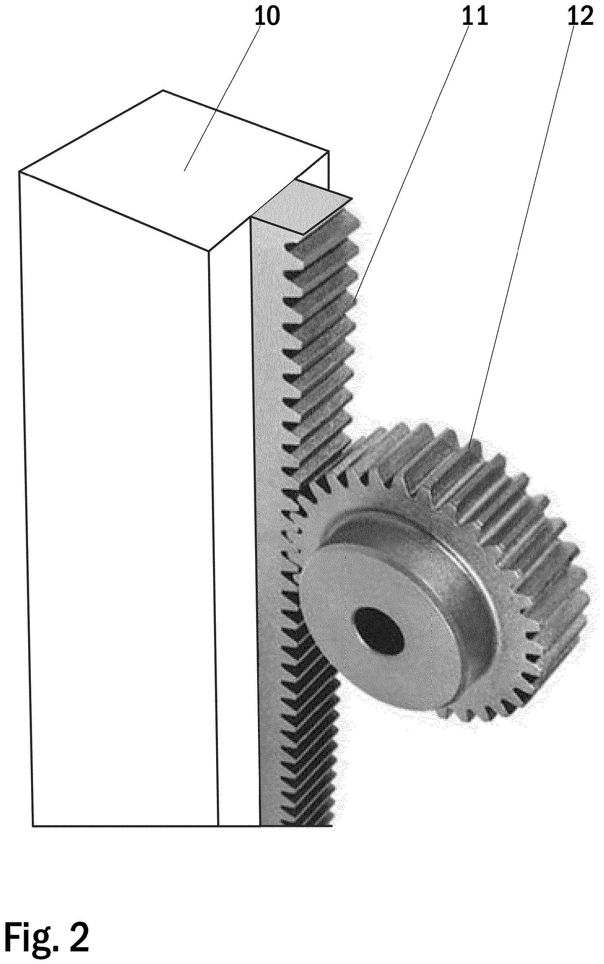

Prior art drawing of Figure 1 has been presented earlier. In the following, the invention will be described in greater detail by means of preferred embodiments with reference to the accompanying drawings of Figures 2 to 8.

### DETAILED DESCRIPTION

The idea of the present invention is to utilize tidal forces in providing electrical energy in a buoyant vessel, which electrical energy can also be used in said buoyant vessel.

The arrangement for generating electrical energy in a buoyant vessel according to one embodiment of the present invention comprises a buoyant vessel and an at least one pile fixedly moored in the seabed or in the riverbed, each of said at least one pile comprising in its upper portion an at least one linear gear rack, wherein said buoyant vessel comprises: an at least one circular pinion gear arranged to engage with said at least one linear gear rack, an at least one gear arrangement arranged to receive rotational motion from said at least one circular pinion gear, and a generator arranged to receive rotational motion from said at least one gear arrangement and transfer said received rotational motion into electrical energy.

Figure 2 illustrates a part of one embodiment of a pile of an arrangement for generating electrical energy in a buoyant vessel according to the present invention. In the presented embodiment said pile 10 is fixedly moored in the seabed or in the riverbed. Said pile 10 comprises in its upper portion a linear gear rack 11.

In the presented arrangement the buoyant vessel comprises a circular pinion gear 12 arranged to engage with said linear gear rack 11 of said pile 10. Said linear gear rack 11 together with said circular pinion gear 12 operate to translate linear motion into rotational motion.

Said linear gear rack 11 and said circular pinion gear 12 are specially designed for very slow speeds. Furthermore, said linear gear rack 11 and said circular pinion gear 12 are specially designed so that they can withstand an extremely high tangential force i.e., force on said linear gear rack 11 and an extremely high torque on said circular pinion gear 12. Said the buoyant vessel may also comprise a shaft 13 on which said circular pinion gear 12 has been mounted as illustrated in Figure 2.

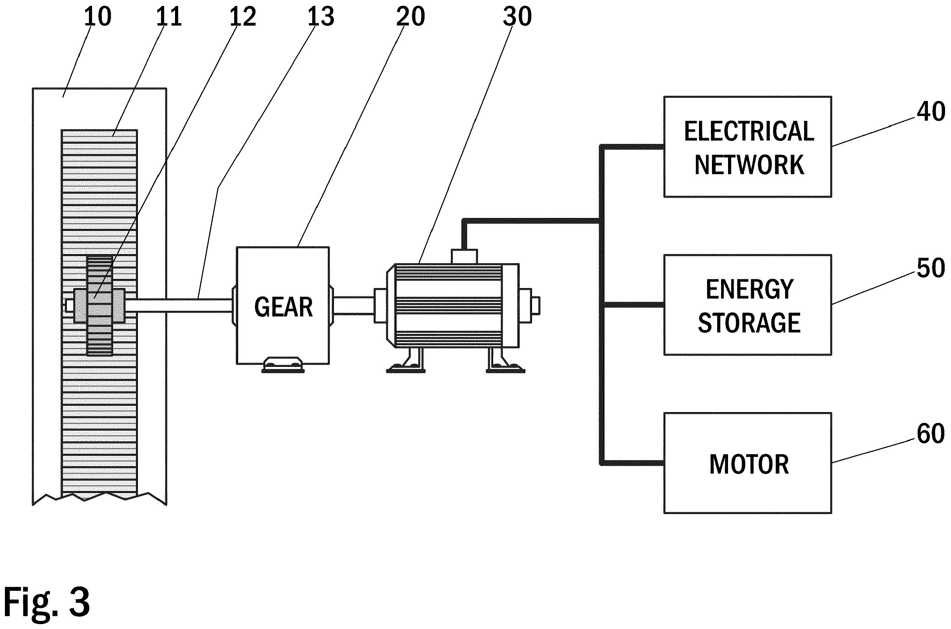

Figure 3 illustrates an operational diagram of one embodiment of an arrangement for generating electrical energy according to the present invention. In the presented embodiment said arrangement comprises an at least one pile 10 fixedly moored in the seabed or in the riverbed. In the presented embodiment each of said at least one pile 10 comprises in its upper portion an at least one linear gear rack 11. In the presented embodiment the arrangement comprises an at least one circular pinion gear 12 for each of said at least one said at least one linear gear rack 11, said at least one circular pinion gear 12 arranged to engage with said at least one linear gear rack 11 of said at least one pile 10. Said linear gear rack 11 together with said circular pinion gear 12 are arranged to operate for translating linear motion into rotational motion.

In the presented embodiment said arrangement comprises an at least one gear arrangement 20 arranged to receive rotational motion from a circular pinion gear 12 of said at least one circular pinion gear 12. In the presented embodiment a circular pinion gear 12 of said at least one circular pinion gear 12 transfers the rotational motion to a gear arrangement 20 via a shaft 13 on which said circular pinion gear 12 has been mounted.

In the presented embodiment said arrangement comprises a generator 30 arranged to receive rotational motion from said at least one gear arrangement 20 and transfer the received rotational motion into electrical energy. In the presented embodiment said arrangement comprises an electrical connection from the generator 30 to an electrical network 40 and/or to an energy storage 50 and/or to one or more motors 60. In the presented embodiment said generator 30 is arranged to transfer said electrical energy to said electrical network 40 and/or to said energy storage 50 and/or to said one or more motors 60. Said electrical network 40 may provide electrical energy for lighting solutions, heating solutions, ventilation solutions, and/or air conditioning solutions in the buoyant vessel according to the present invention.

Said energy storage 50 may be arranged to act both as an energy storage and as an energy supply. Said energy storage 50 may be a super capacitor 50, said super capacitor 50 acting as an energy storage and/or as an energy supply. Said energy storage 50 may be a battery 50, said battery 50 acting as an energy storage and/or as an energy supply. In the presented embodiment said arrangement may also comprise one or more converters, which are not depicted in Figure 3.

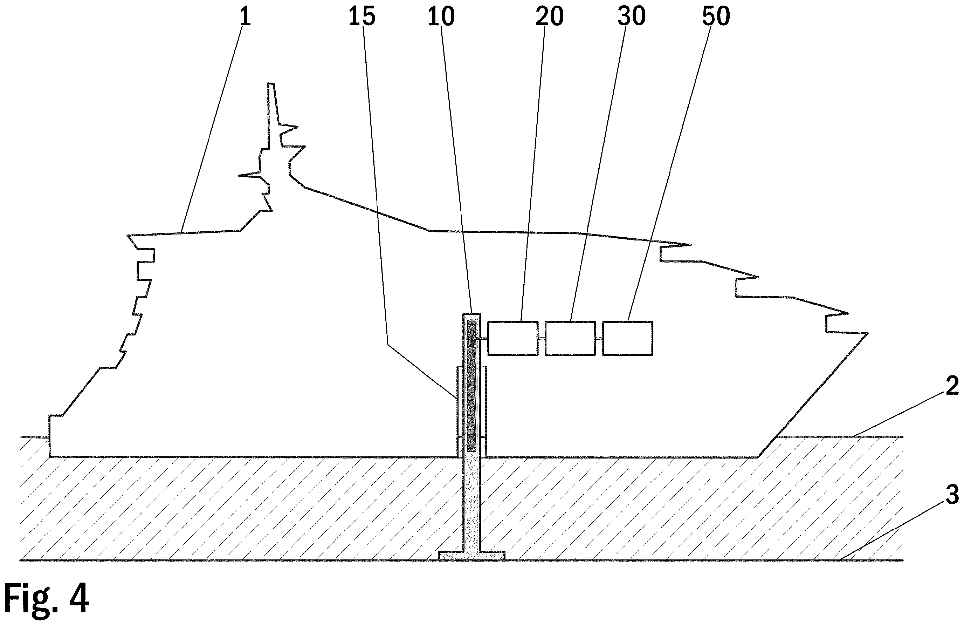

Figure 4 illustrates one embodiment of an arrangement for generating electrical energy in a buoyant vessel according to the present invention during a high tide. In Figure 4 the water level during a high tide is depicted with a reference number 2. In the presented embodiment said arrangement comprises a buoyant vessel 1 and a pile 10 fixedly moored in the seabed or in the riverbed, said pile 10 comprising in its upper portion an at least one linear gear rack 11. In the presented embodiment the buoyant vessel 1 comprises a shaft frame 15 arranged in said buoyant vessel 1 around said pile 10 fixedly moored in the seabed 3 or in the riverbed 3.

In the presented embodiment the arrangement comprises a circular pinion gear 12 arranged in said buoyant vessel 1, said circular pinion gear 12 arranged to engage with a linear gear rack 11 of said pile 10. In the presented embodiment said shaft frame 15 comprises an opening allowing said circular pinion gear 12 to engage with said linear gear rack 11 of said pile 10. Said shaft frame 15 may be arranged in said buoyant vessel 1 so that when in operation said opening in said shaft frame 15 is always above the water level. Said linear gear rack 11 together with said circular pinion gear 12 are arranged to operate for translating linear motion into rotational motion. In the presented embodiment said arrangement comprises a gear arrangement 20 arranged in said buoyant vessel 1, said gear arrangement 20 arranged to receive rotational motion from said circular pinion gear 12.

In the presented embodiment the arrangement comprises a generator 30 arranged in said buoyant vessel 1, said generator 30 arranged to receive rotational motion from said gear arrangement 20 and transfer the received rotational motion into electrical energy. In the presented embodiment said arrangement comprises an energy storage 50 arranged in said buoyant vessel 1, said energy storage 50 arranged to receive electrical energy from said generator 30. In the presented embodiment the arrangement also comprises an electrical connection from the generator 30 to an energy storage 50.

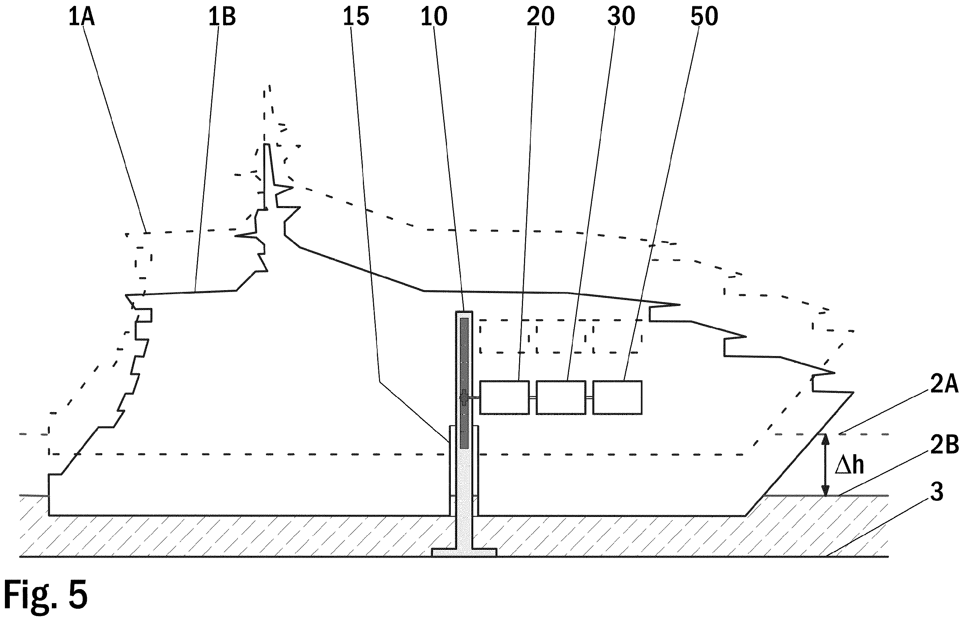

Figure 5 illustrates one embodiment of an arrangement for generating electrical energy in a buoyant vessel according to the present invention during a low tide. The embodiment of an arrangement presented in Figure 5 corresponds to the embodiment presented in Figure 4 with the exception that the water level is now lower during a low tide.

In Figure 5 the water level during a low tide is depicted with a reference number 2B. Respectively, in Figure 5 the water level during a high tide is depicted with a dashed line and a reference number 2A. The distance between the high tide and the low tide has been marked as Δ*h*. In Figure 5 the position of the buoyant vessel 1 during a low tide is depicted with a reference number 1B. Respectively, in Figure 5 the position of the buoyant vessel 1 during a high tide is depicted with a dashed line and a reference number 1A.

As illustrated in Figure 5, in the presented embodiment the pile 10 with the linear gear rack 11 has remained during a low tide in the same position as during a high tide. Respectively, as illustrated in Figure 5 the buoyant vessel 1 is now in a lower position 1B than its previous position 1A. Likewise in the presented embodiment, the shaft frame 15, the circular pinion gear 12, the gear arrangement 20, the generator 30 and the energy storage 50 arranged in said buoyant vessel 1 are all now in a lower position than previously in Figure 4.

As can be understood from Figures 4 and 5, the circular pinion gear 12 has run against the linear gear rack 11 the entire distance Δ*h* or at least a portion of said entire distance Δ*h*. In the presented embodiment said circular pinion gear 12 translates linear motion into rotational motion and transfers said rotational motion via said gear arrangement 20 to said generator 30, which generator receives rotational motion from said gear arrangement 20, transfers said received rotational motion into electrical energy and forwards said electrical energy to said energy storage 50.

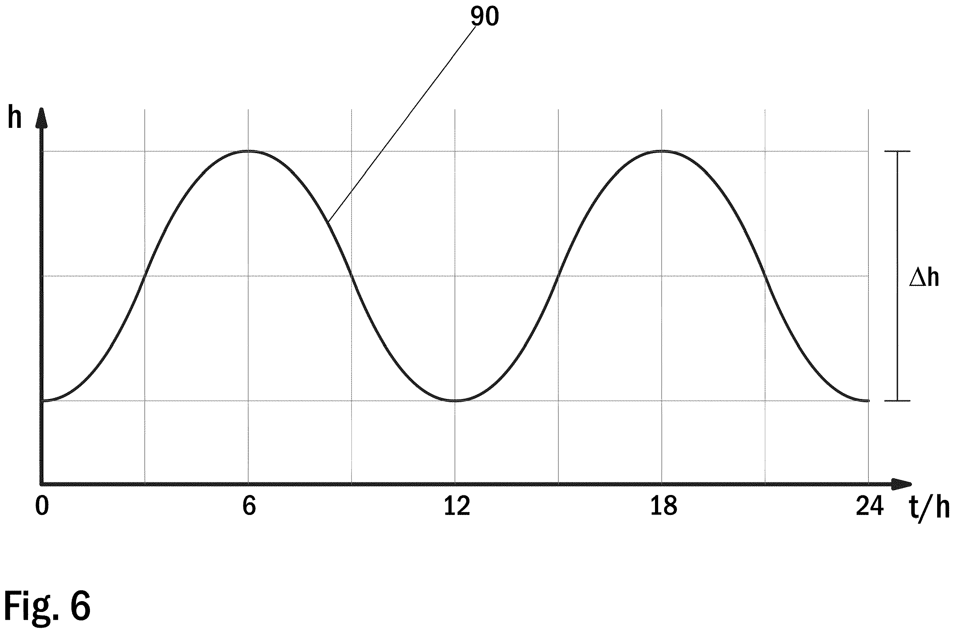

Figure 6 illustrates a variation of water level between a low tide and a high tide during a 24-hour period. In Figure 6 the water level is indicated with a reference number 90. In Figure 6 the distance between a low tide and a high tide is marked as Δ*h*.

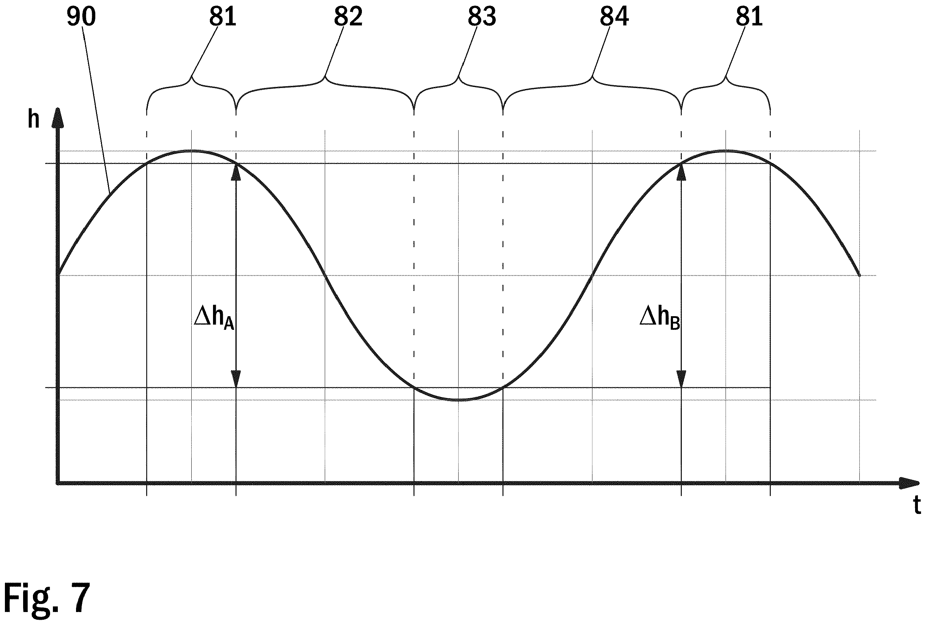

Figure 7 illustrates operational cycles of one embodiment of an arrangement for generating electrical energy according to the present invention. In Figure 7 the water level is indicated with a reference number 90. In the presented embodiment, the presented operational cycles are high tide operation 81, downwards operation 82, low tide operation 83, upwards operation 84.

During the high tide operation 81 the arrangement for generating electrical energy is prepared for generating electrical energy from the buoyant vessel 1 going downwards. Accordingly, the generator 30 arranged to generate electrical energy from the received rotational motion via said gear arrangement 20 from said circular pinion gear 12 is set to resist the rotational motion of said circular pinion gear 12 during the buoyant vessel 1 going downwards. In essence, when engaged, the generator is set to generate a torque resisting the torque of the driving rotational motion received from said gear arrangement.

During the downwards operation 82 the arrangement for generating electrical energy generates electrical energy as the buoyant vessel 1 is going downwards. During the downwards operation 82 the arrangement for generating electrical energy generates an upwards force complementing the uplifting buoyant force, said complementing upwards force lifting the buoyant vessel 1 upwards in relation to the water level for a distance of Δ*h_{A}* this in turn reducing the displacement of the buoyant vessel 1 and the uplifting buoyant force. During the downwards operation 82 the weight of the buoyant vessel 1 then overcomes the reduced uplifting buoyant force and said complementing upwards force and the generator 30 starts to generate electrical energy as the buoyant vessel 1 is going downwards.

During the low tide operation 83 the arrangement for generating electrical energy is prepared for generating electrical energy from the buoyant vessel 1 going upwards. Accordingly, the generator 30 arranged to generate electrical energy from the received rotational motion via said gear arrangement 20 from said circular pinion gear 12 is set to resist the rotational motion of said circular pinion gear 12 during the buoyant vessel 1 going upwards. In essence, when engaged, the generator is set to generate a torque resisting the torque of the driving rotational motion received from said gear arrangement.

During the upwards operation 84 the arrangement for generating electrical energy generates electrical energy as the buoyant vessel 1 is going upwards. During the upwards operation 84 the arrangement for generating electrical energy generates a downwards force complementing the weight of the buoyant vessel 1, said complementing downwards force pressing the buoyant vessel 1 downwards in relation to the water level for a distance of Δ*h_{B}* this in turn increasing the displacement of the buoyant vessel 1 and the uplifting buoyant force. During the upwards operation 84 the increased uplifting buoyant force then overcomes the weight the buoyant vessel 1 and said complementing downwards force and the generator 30 starts to generate electrical energy as the buoyant vessel 1 is going upwards.

In the arrangement for generating electrical energy according to the present invention, there may be different torque levels applied for the generated torques between the buoyant vessel 1 going downwards when compared to during the buoyant vessel 1 going downwards. In the arrangement for generating electrical energy according to the present invention, the length of the linear gear rack 11 of the pile 10 may be at least Δ*h* + Δ*h_{A}* + *Δh_{B}*, where Δ*h* is the distance between a low tide and a high tide, Δ*h_{A}* is the distance of a generated complementing upwards force lifting the buoyant vessel 1 upwards in relation to the water level as the buoyant vessel 1 is going downwards, and Δ*h_{B}* is the distance of a generated complementing downwards force pressing the buoyant vessel 1 downwards in relation to the water level as the buoyant vessel 1 is going downwards.

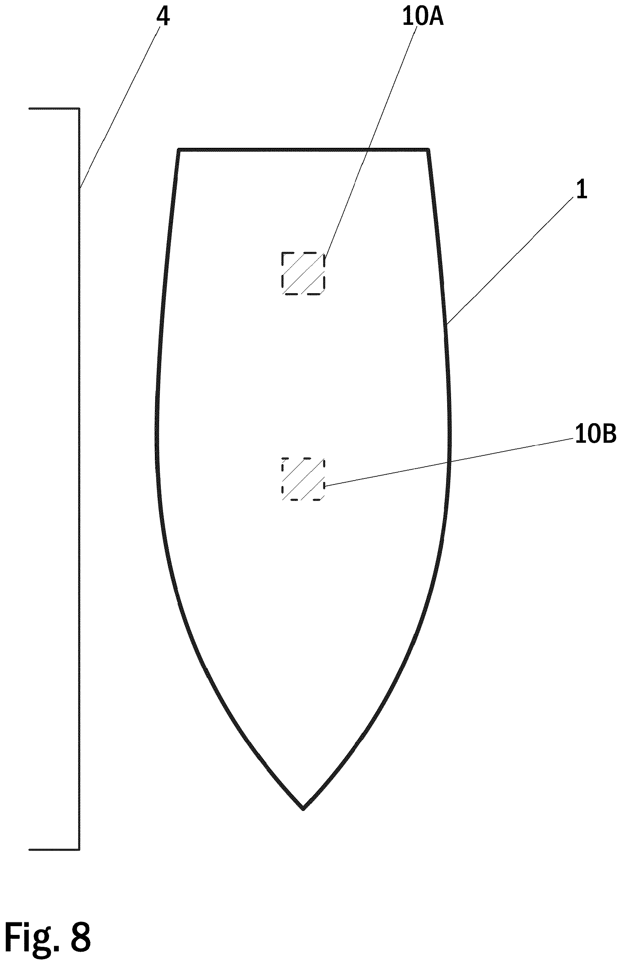

Figure 8 illustrates another embodiment of an arrangement for generating electrical energy in a buoyant vessel according to the present invention. In the presented another embodiment, the presented buoyant vessel 1 is arranged aside a pier 4 in a city waterfront location. In the presented another embodiment, the presented arrangement comprises two piles 10A, 10B fixedly moored in the seabed or in the riverbed marked with a dashed line in Figure 8.

In an embodiment of an arrangement for generating electrical energy in a buoyant vessel according to the present invention, said buoyant vessel 1 may be arranged near the shoreline. Furthermore, in an embodiment of an arrangement at least one pile may be supported to the shore with an additional support structure.

In an embodiment of an arrangement for generating electrical energy in a buoyant vessel according to the present invention, said buoyant vessel 1 may be arranged in the vicinity of a tidal dam. Furthermore, in an embodiment of an arrangement at least one pile may be supported to the tidal dam structure.

In an embodiment of an arrangement for generating electrical energy in a buoyant vessel according to the present invention, said buoyant vessel 1 may e.g. be a hotel ship 1 arranged to serve as a hotel and/or restaurant facility.

In the arrangement for generating electrical energy according to the present invention, the arrangement and the actuated forces and torques have been dimensioned so that the gear rack(s) 11, circular pinion gear(s) 12, the gear arrangement(s) 20, the generator(s) 30 and other heavy-duty components are able to withstand said actuated forces and torques.

With the help of the arrangement according to the present invention additional energy can be provided for buoyant vessels when compared with the previous solutions. This is very helpful with buoyant vessels arranged to serve as a full-service hotel and restaurant facilities.

With the help of the arrangement according to the present invention a considerably amount of energy can be provided for e.g., lighting, heating, ventilation, and air conditioning solutions of buoyant vessels e.g., comprising multiple accommodations and multitude of other services for the guests such as bars, restaurants, spas, leisure facilities, casinos, etc.

With the help of the arrangement according to the present invention a considerably amount of electrical energy can be provided, which electrical energy can be used in said buoyant vessel, which electrical energy can be forwarded to an electrical network and which electrical energy can be stored for later usage. The arrangement according to the present invention provides an effective and elegant solution which provides a considerable amount of energy, saves operative costs and contributes positively to saving the environment.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. An arrangement for generating electrical energy in a buoyant vessel, said arrangement comprising a buoyant vessel (1, 1A, 1B) and an at least one pile (10, 10A, 10B) fixedly moored in the seabed (3) or in the riverbed (3), each of said at least one pile (10, 10A, 10B) comprising in its upper portion an at least one linear gear rack (11), wherein said buoyant vessel (1, 1A, 1B) comprises:
- an at least one circular pinion gear (12) arranged to engage with said at least one linear gear rack (11),
- an at least one gear arrangement (20) arranged to receive rotational motion from said at least one circular pinion gear (12), and
- a generator (30) arranged to receive rotational motion from said at least one gear arrangement (20) and transfer said received rotational motion into electrical energy.

2. An arrangement according to claim 1, wherein said generator (30) is arranged to transfer said electrical energy to an electrical network (40).

3. An arrangement according to claim 1 or to claim 2, wherein said generator (30) is arranged to transfer said electrical energy to an energy storage (50), such as a super capacitor (50) or a battery (50), said energy storage (50) being arranged to act both as an energy storage and as an energy supply.

4. An arrangement according to any of the claims 1-3, wherein said generator (30) is arranged to transfer said electrical energy to one or more motors (60).

5. An arrangement according to any of the claims 2-4, wherein said electrical network (40), said energy storage (50) and/or said one or more motors (60) provide(s) electrical energy for lighting solutions, heating solutions, ventilation solutions, and/or air conditioning solutions in said buoyant vessel (1, 1A, 1B).

6. An arrangement according to any of the claims 1-5, wherein said buoyant vessel (1, 1A, 1B) comprises an at least one shaft frame (15) arranged in said buoyant vessel (1) around said at least one pile (10, 10A, 10B), wherein said at least one shaft frame (15) comprise(s) an at least one opening allowing said at least one circular pinion gear (12) to engage with said at least one linear gear rack (11).

7. An arrangement according to claim 6, wherein said at least one shaft frame (15) is arranged in said buoyant vessel (1, 1A, 1B) so that when in operation said at least one opening in said at least one shaft frame (15) is always above the water level.

8. An arrangement according to any of the claims 1-7, wherein said at least one pile (10, 10A, 10B) is supported to the shore with an additional support structure.

9. An arrangement according to any of the claims 1-8, wherein said at least one pile (10, 10A, 10B) is supported to a tidal dam structure.

10. An arrangement according to any of the claims 1-9, wherein during the buoyant vessel (1, 1A, 1B) going downwards, when engaged, said generator (30) is arranged to generate a torque resisting the torque of said received rotational motion from said at least one gear arrangement (20).

11. An arrangement according to claim 10, wherein during the buoyant vessel (1, 1A, 1B) going upwards, when engaged, said generator (30) is arranged to generate a torque resisting the torque of said received rotational motion from said at least one gear arrangement (20).

12. An arrangement according to claim 11, wherein different torque levels are applied for the generated torques between during said buoyant vessel (1, 1A, 1B) going downwards when compared to during said buoyant vessel (1, 1A, 1B) going downwards.

13. An arrangement according to any of the claims 1-12, wherein the length of said at least one linear gear rack (11) of said at least one pile (10, 10A, 10B) is at least Δ*h* + Δ*h_{A}* + *Δh_{B}*, where Δ*h* is the distance between a low tide and a high tide, Δ*h_{A}* is the distance of a generated complementing upwards force lifting the buoyant vessel (1, 1A, 1B) upwards in relation to the water level as the buoyant vessel (1, 1A, 1B) is going downwards, and Δ*h_{B}* is the distance of a generated complementing downwards force pressing the buoyant vessel (1, 1A, 1B) downwards in relation to the water level as the buoyant vessel (1, 1A, 1B) is going downwards.

14. A buoyant vessel (1, 1A, 1B) of an arrangement according to any of the claims 1-13.

15. A buoyant vessel (1, 1A, 1B) according to claim 14, wherein said buoyant vessel (1, 1A, 1B) is a ship (1, 1A, 1B) arranged to serve as a hotel and/or restaurant facility.
